# EUROPÄISCHE PATENTANMELDUNG

(11) **EP 2 822 123 A2**
(43) Veröffentlichungstag der Anmeldung: **07.01.2015**
(21) Anmeldenummer: 14175343.4
(22) Anmeldetag: 02.07.2014
(51) Int. Cl.: H02G 15/007

(54) **Klemmenhalter und Bügeleisen mit einem solchen Klemmenhalter**

(30) Priorität: 04.07.2013 CN 201320396923 U
(71) Anmelder: BSH Bosch und Siemens Hausgeräte GmbH, 81739 München (DE)
(72) Erfinder: Zhao, Liang, 210000 Nanjing (CN); Zhu, Qingmei, 210046 Nanjing (CN)

(57) **Zusammenfassung**

Die vorliegende Erfindung offenbart einen Klemmenhalter (3) zur Halterung elektrisch leitfähiger Klemmen (4) innerhalb eines Bügeleisens (100), das ein Gehäuse (1), eine im unteren Teil des Gehäuses (1) angeordnete Grundplatte (21) und ein elektrisches Heizelement (22) zum Erhitzen der Grundplatte (21) umfasst. Der Klemmenhalter (3) umfasst eine Basisplatte (31), an der mehrere langgestreckte Aussparungen (311) zur Aufnahme der elektrisch leitfähigen Klemmen (4) ausgebildet sind, und eine Abdeckplatte (32), die in einer Quer- bzw. Breitenrichtung die Aussparungen (311) teilweise abdecken kann. Zwischen Abdeckplatte (32) und Basisplatte (31) ist ein Verbindungsarm (33) angeordnet, über den die Abdeckplatte (32) mit der Basisplatte (31) verbunden ist. Mittels des Verbindungsarms (33) lässt sich zwischen Abdeckplatte (32) und Basisplatte (31) eine bewegliche Verbindung herstellen. Zum Einbau der elektrisch leitfähigen Klemmen (4) in den Klemmenhalter (3) kann die Abdeckplatte (32) ausgeschwenkt werden, um mehr Raum für den Einbau der elektrisch leitfähigen Klemmen (4) zu schaffen. Die Erfindung offenbart ferner ein Bügeleisen (100) mit dem oben beschriebenen Klemmenhalter (3).

## Beschreibung

### Gebiet der Erfindung

Die vorliegende Erfindung betrifft einen Klemmenhalter zur Halterung elektrisch leitfähiger Klemmen innerhalb eines Bügeleisens, das ein Gehäuse, eine im unteren Teil des Gehäuses angeordnete Grundplatte und ein elektrisches Heizelement zum Erhitzen der Grundplatte umfasst, wobei der Klemmenhalter eine Basisplatte umfasst, an der mehrere langgestreckte Aussparungen zur Aufnahme der elektrisch leitfähigen Klemmen ausgebildet sind, und eine Abdeckplatte umfasst, die in einer Quer- bzw. Breitenrichtung die Aussparungen teilweise abdecken kann.

Die vorliegende Erfindung betrifft ferner ein Bügeleisen, insbesondere ein solches, in dessen Innenraum ein oben beschriebener Klemmenhalter zur Halterung elektrisch leitfähiger Klemmen eingebaut ist.

### Technischer Hintergrund

Herkömmliche Bügeleisen, wie beispielsweise Dampfbügeleisen, umfassen typischerweise ein Gehäuse, eine im unteren Teil des Gehäuses angeordnete Grundplatte und ein elektrisches Heizelement zum Erhitzen der Grundplatte. Innerhalb des Gehäuses ist häufig ein Klemmenhalter eingebaut, welcher dem Befestigen elektrisch leitfähiger Metallklemmen zum Verbinden mit dem elektrischen Heizelement oder mit anderen Steuerleitungen dient. Aus Sicherheitsgründen sollen Elektrogeräte als solche bestimmte Feuerschutzanforderungen erfüllen. Um vor beim Betrieb der elektrisch leitfähigen Metallklemmen des Bügeleisens auftretenden sehr hohen Temperaturen und einer eventuell dadurch verursachten spontanen Verbrennung des Werkstoffes in der Umgebung zu schützen, ist der Klemmenhalter in der Regel aus einem ein Flammschutzmittel enthaltenden Werkstoff angefertigt. Um zu vermeiden, dass bei der Herstellung, Zusammensetzung bzw. Verwendung eines Bügeleisens sich die elektrisch leitfähigen Klemmen unerwartet vom Klemmenhalter ablösen und einander berühren, so dass die betriebsmäßigen Schaltungsanordnungen beeinträchtigt werden, ist am Klemmenhalter meistens eine Abdeckleiste vorgesehen, welche die elektrisch leitfähigen Klemmen von oben abdeckt. Beim Einbau der elektrisch leitfähigen Klemmen in den Klemmenhalter sowie bei der Bedienung der Abdeckleiste ist jedoch oft wegen der Alterung oder einer Überbelastung der Abdeckleiste eine Ablösung der Abdeckleistung vom Klemmenhalter zu erwarten, was eine Auswechselung des ganzen Klemmenhalters notwendig macht und dadurch zur Erhöhung der Herstellungskosten führt. Daher ist es erforderlich, den Aufbau eines derartigen Klemmenhalters weiter zu optimieren.

### Offenbarung der Erfindung

Der vorliegenden Erfindung liegt die Aufgabe zugrunde, einen innerhalb eines Bügeleisens einsetzbaren Klemmenhalter anzubieten, der in seiner strukturellen Gestaltung optimiert ist.

Erfindungsgemäß wird die Aufgabe gelöst durch einen Klemmenhalter zur Halterung elektrisch leitfähiger Klemmen innerhalb eines Bügeleisens, das ein Gehäuse, eine im unteren Teil des Gehäuses angeordnete Grundplatte und ein elektrisches Heizelement zum Erhitzen der Grundplatte umfasst. Der Klemmenhalter umfasst eine Basisplatte, an der mehrere langgestreckte Aussparungen zur Aufnahme der elektrisch leitfähigen Klemmen ausgebildet sind, und eine Abdeckplatte, die in einer Quer- bzw. Breitenrichtung die Aussparungen teilweise abdecken kann. Der erfindungsgemäße Klemmenhalter zeichnet sich schließlich dadurch aus, dass zwischen Abdeckplatte und Basisplatte ein Verbindungsarm angeordnet ist, über den die Abdeckplatte mit der Basisplatte verbunden ist.

Mittels des Verbindungsarms lässt sich vorteilhaft zwischen Abdeckplatte und Basisplatte eine bewegliche Verbindung realisieren, so dass zum Einbau der elektrisch leitfähigen Klemmen in den Klemmenhalter die Abdeckplatte ausgeschwenkt werden kann, um mehr Raum für den Einbau der elektrisch leitfähigen Klemmen zu schaffen.

Vorteilhafte Aus- und Weiterbildungen, welche einzeln oder in Kombination miteinander eingesetzt werden können, sind Gegenstand der abhängigen Ansprüche.

In einer bevorzugten Weiterbildung der Erfindung ist der Verbindungsarm an einem Ende an der Basisplatte befestigt und erstreckt sich am anderen Ende um einen vorbestimmten Abstand nach außen, um fest an der Abdeckplatte angeschlossen zu sein. Mit der Ausgestaltung, dass der Verbindungsarm eine vorbestimmte Erstreckung aufweist, kann sich die Abdeckplatte durch ihre Ausschwenkbewegung um einen gewissen Abstand von der Basisplatte entfernen. Überdies lässt sich dadurch eine bessere Biegsamkeit des Verbindungsarms erreichen.

In einer bevorzugten Weiterbildung der Erfindung ist der Verbindungsarm biegsam und verformbar ausgebildet. Ein Verbindungsarm, der biegsam und verformbar ausgebildet ist, lässt sich nur schwer zerreißen, wodurch eine Ablösung der Abdeckplatte von der Basisplatte vorteilhaft verhindert wird.

In einer bevorzugten Weiterbildung der Erfindung ist der Verbindungsarm durchgebogen, wenn die Abdeckplatte die Aussparungen teilweise abdeckt.

In einer bevorzugten Weiterbildung der Erfindung sind die Abdeckplatte, die Basisplatte und in Gänze oder zumindest teilweise auch der Verbindungsarm einstückig hergestellt. Durch eine einstückige Herstellung von Abdeckplatte, Basisplatte und Verbindungsarm in einer und derselben Form können vorteilhaft Herstellungskosten eingespart werden.

In einer bevorzugten Weiterbildung der Erfindung ist der Verbindungsarm zweigeteilt ausgebildet, wobei die beiden Teile des Verbindungsarms symmetrisch zueinander auf beiden Seiten eines Endes der Abdeckplatte angeordnet sind.

In einer bevorzugten Weiterbildung der Erfindung ist an zumindest einem Ende der Abdeckplatte ein Schnapphaken vorgesehen, der mit der Basisplatte verrastet, wenn die Abdeckplatte die Aussparungen abdeckt. Mit einem derartigen Schnappverschluss kann die Abdeckplatte vorteilhaft fest in ihrer Abdeckstellung gehalten werden.

Die Erfindung schlägt ferner ein Bügeleisen vor, das ein Gehäuse, eine im unteren Teil des Gehäuses angeordnete Grundplatte, ein elektrisches Heizelement zum Erhitzen der Grundplatte und einen Klemmenhalter gemäß einer der vorangehenden Ausgestaltungen, der zur Halterung elektrisch leitfähiger Klemmen innerhalb des Gehäuses fest angeordnet ist, umfasst.

Weitere Vorteile der Erfindung werden im Folgenden anhand eines Ausführungsbeispiels sowie in Verbindung mit der Zeichnung beschrieben:

### Darstellung der Abbildungen

Es zeigen schematisch:
- FIG 1: in räumlicher Darstellung eine konkrete Ausführungsform eines Bügeleisens gemäß der Erfindung,
- FIG 2: eine räumliche Explosionsdarstellung des in FIG 1 gezeigten Bügeleisens,
- FIG 3: eine räumliche Darstellung eines Klemmenhalters des in FIG 2 gezeigten Bügeleisens, und
- FIG 4: eine weitere räumliche Darstellung eines Klemmenhalters des in FIG 2 gezeigten Bügeleisens.

### Konkrete Ausführungsformen

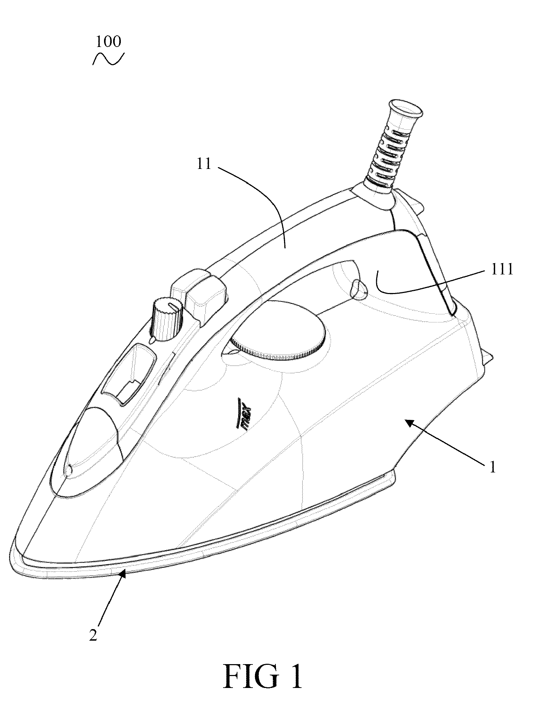

In FIG 1 ist eine konkrete Ausführungsform eines erfindungsgemäßen Bügeleisens 100 dargestellt. Nach dieser Ausführungsform handelt es sich beim Bügeleisen 100 um ein Dampfbügeleisen mit einer Dampferzeugungseinrichtung, das ein Gehäuse 1 und einen Grundträger 2 umfasst. Es versteht sich, dass die Erfindung auch bei elektrischen Bügeleisen ohne Dampferzeugungseinrichtung oder bei Bügeleisen mit einer externen Dampferzeugungseinrichtung zur Verwendung kommen kann.

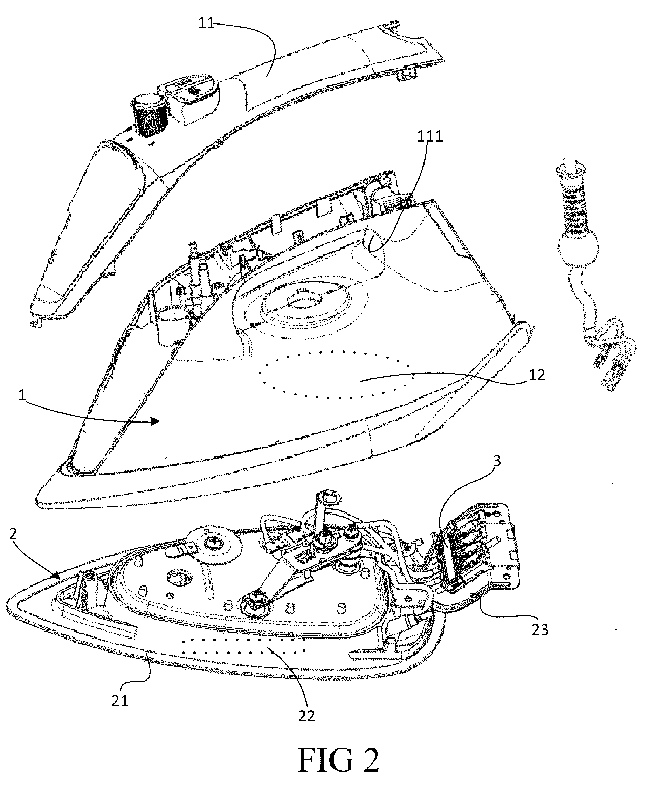

Wie aus FIG 2 zu erkennen ist, besteht das Gehäuse 1 üblicherweise aus einem Kunststoff und umfasst einen Handgriff 11 und einen innerhalb des Gehäuses 1 ausgebildeten Wasserbehälter 12. Der Handgriff 11 weist eine gekrümmte Innenwand 111 auf, welche die Bedienung des Bügeleisens vereinfacht. Der Grundträger 2 weist eine im unteren Teil des Gehäuses 1 befindliche, metallische Grundplatte 21 zum Bügeln und ein zum Erhitzen der Grundplatte vorgesehenes, elektrisches Heizelement 22 auf. Dieses Heizelement 22 kann einen Widerstandsdraht mit hoher Impedanz enthalten, dessen Plus- und Minusanschluss über entsprechende Leitungen mit einer 220V- oder 110V-Wechselstromquelle verbunden sind. In der Grundplatte 21 sind mehrere Durchgangsöffnungen (nicht dargestellt) ausgebildet. Zudem ist im Grundträger 2 eine mit dem Wasserbehälter 12 in Verbindung stehende Dampferzeugungskammer (nicht dargestellt) vorgesehen, in die das Wasser aus dem Wasserbehälter 12 eintreten kann und vom elektrischen Heizelement 22 erwärmt wird, bis es in den dampfförmigen Zustand übertritt und somit durch die Durchgangsöffnungen ausströmen kann, um die Bügelwäsche anzufeuchten.

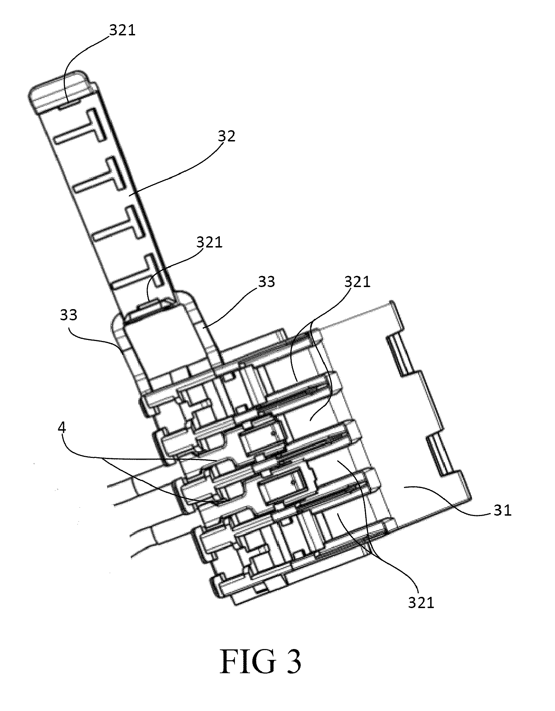

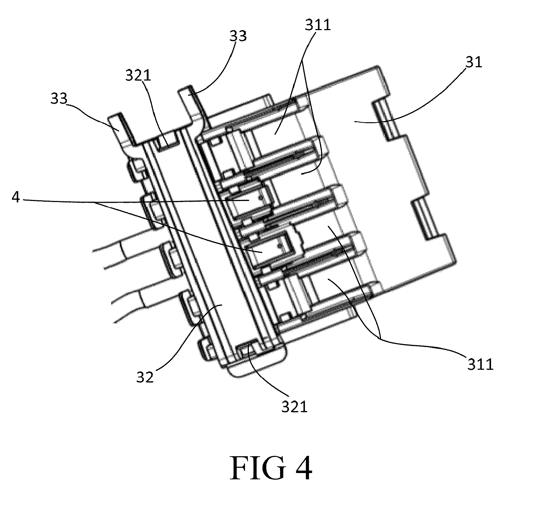

Wie sich aus FIG 3 und 4 ergibt, ist an einem am hinteren Ende des Grundträgers 2 befindlichen Gestell 23 ein Klemmenhalter 3 angeordnet, welcher dem Befestigen elektrisch leitfähiger Metallklemmen 4 dient. Der Klemmenhalter 3 ist aus einem ein Flammschutzmittel enthaltenden Kunststoff angefertigt, wobei der Flammenhemmstoff selbst bei einer Aufheizung der elektrisch leitfähigen Klemmen bis auf eine bestimmte Temperatur von z.B. 750°C weder spontane Verbrennung erfährt noch offenes Feuer hervorruft. Der Klemmenhalter 3 umfasst eine Basisplatte 31, auf deren einen Seite mehrere langgestreckte Aussparungen 311 zur Aufnahme der elektrisch leitfähigen Klemmen 4 ausgebildet sind. An einem Querende der Basisplatte 31 befindet sich eine mit dieser beweglich verbundene Abdeckplatte 32. Zum Einbau der elektrisch leitfähigen Klemmen 4 in den Klemmenhalter 3 kann die Abdeckplatte 32 ausgeschwenkt werden, um mehr Raum für den Einbau der elektrisch leitfähigen Klemmen 4 zu schaffen.

Zwischen Basisplatte 31 und Abdeckplatte 32 ist ein Verbindungsarm 33 angeordnet, über den die Abdeckplatte 32 mit der Basisplatte 31 verbunden ist. Hierfür ist der Verbindungsarm 33 an einem Ende an der Basisplatte 31 befestigt und erstreckt sich am anderen Ende um einen vorbestimmten Abstand nach außen, um fest an der Abdeckplatte 32 angeschlossen zu sein. Mit der Ausgestaltung, dass der Verbindungsarm 33 eine vorbestimmte Erstreckung aufweist, kann sich die Abdeckplatte 32 durch ihre Ausschwenkbewegung um einen gewissen Abstand von der Basisplatte 31 entfernen, um mehr Raum für den Einbau der elektrisch leitfähigen Klemmen 4 in den Klemmenhalter 3 zu schaffen. Der Verbindungsarm 33 ist biegsam und verformbar ausgebildet und lässt sich nur schwer zerreißen, wodurch eine Ablösung der Abdeckplatte 32 von der Basisplatte 31 verhindert wird. Des Weiteren wird der Verbindungsarm 33 in einer Anzahl von zwei bereitgestellt, wobei die beiden Verbindungsarme symmetrisch zueinander auf beiden Seiten eines Endes der Abdeckplatte 32 angeordnet sind. Darüber hinaus werden die Abdeckplatte 32, die Basisplatte 31 und der Verbindungsarm 33 in einer und derselben Form einstückig hergestellt, was zur erheblichen Reduzierung der Herstellungskosten beiträgt. An beiden Enden der Abdeckplatte 32 ist jeweils ein Schnapphaken 321 vorgesehen, der, wenn die Abdeckplatte 32 die Aussparungen 311 abdeckt, mit der Basisplatte 31 verrasten kann, um die Abdeckplatte 32 fest in der Abdeckstellung zu halten. Dabei ist der Verbindungsarm 33 durchgebogen und lässt sich daher einer bestimmten Biegekraft aussetzen, ohne dabei zerbrochen zu werden.

Das oben Beschriebene stellt keine Einschränkung des Schutzumfangs der Erfindung dar, sondern dient lediglich der näheren Erläuterung möglicher Ausführungsformen der Erfindung. Jede gleichwertige Ausführung oder Variation, welche von den Grundideen der Erfindung ausgeht, ist daher vom Schutzumfang der vorliegenden Erfindung umfasst. Diese offenbart einen Klemmenhalter 3 zur Halterung elektrisch leitfähiger Klemmen 4 innerhalb eines Bügeleisens 100, das ein Gehäuse 1, eine im unteren Teil des Gehäuses 1 angeordnete Grundplatte 21 und ein elektrisches Heizelement 22 zum Erhitzen der Grundplatte 21 umfasst. Der Klemmenhalter 3 umfasst eine Basisplatte 31, an der mehrere langgestreckte Aussparungen 311 zur Aufnahme der elektrisch leitfähigen Klemmen 4 ausgebildet sind, und eine Abdeckplatte 32, die in einer Quer- bzw. Breitenrichtung die Aussparungen 311 teilweise abdecken kann. Zwischen Abdeckplatte 32 und Basisplatte 31 ist ein Verbindungsarm 33 angeordnet, über den die Abdeckplatte 32 mit der Basisplatte 31 verbunden ist. Mittels des Verbindungsarms 33 lässt sich zwischen Abdeckplatte 32 und Basisplatte 31 eine bewegliche Verbindung herstellen. Zum Einbau der elektrisch leitfähigen Klemmen 4 in den Klemmenhalter 3 kann die Abdeckplatte 32 ausgeschwenkt werden, um mehr Raum für den Einbau der elektrisch leitfähigen Klemmen 4 zu schaffen. Die Erfindung offenbart ferner ein Bügeleisen 100) mit dem oben beschriebenen Klemmenhalter 3.

### Bezugszeichenliste

- 100: Bügeleisen
- 1: Gehäuse
- 11: Handgriff
- 111: Innenwand
- 12: Wasserbehälter
- 2: Grundträger
- 21: Grundplatte
- 22: Elektrisches Heizelement
- 23: Gestell
- 3: Klemmenhalter
- 31: Basisplatte
- 311: Aussparung
- 32: Abdeckplatte
- 321: Schnapphaken
- 33: Verbindungsarm
- 4: Elektrisch leitfähige Klemme

## Patentansprüche

1. Klemmenhalter (3) zur Halterung elektrisch leitfähiger Klemmen (4) innerhalb eines Bügeleisens (100), das ein Gehäuse (1), eine im unteren Teil des Gehäuses (1) angeordnete Grundplatte (21) und ein elektrisches Heizelement (22) zum Erhitzen der Grundplatte (21) umfasst, wobei der Klemmenhalter (3) eine Basisplatte (31) umfasst, an der mehrere langgestreckte Aussparungen (311) zur Aufnahme der elektrisch leitfähigen Klemmen (4) ausgebildet sind, und eine Abdeckplatte (32) umfasst, die in einer Quer- bzw. Breitenrichtung die Aussparungen (311) teilweise abdecken kann, **dadurch gekennzeichnet, dass** zwischen Abdeckplatte (32) und Basisplatte (31) ein Verbindungsarm (33) angeordnet ist, über den die Abdeckplatte (32) mit der Basisplatte (31) verbunden ist.

2. Klemmenhalter (3) nach Anspruch 1, **dadurch gekennzeichnet, dass** der Verbindungsarm (33) an einem Ende an der Basisplatte (31) befestigt ist und sich am anderen Ende um einen vorbestimmten Abstand nach außen erstreckt, um fest an der Abdeckplatte (32) angeschlossen zu sein.

3. Klemmenhalter (3) nach Anspruch 1 oder 2, **dadurch gekennzeichnet, dass** der Verbindungsarm (33) biegsam und verformbar ausgebildet ist.

4. Klemmenhalter (3) nach einem der Ansprüche 1 bis 3, **dadurch gekennzeichnet, dass** der Verbindungsarm (33) durchgebogen ist, wenn die Abdeckplatte (32) die Aussparungen (311) teilweise abdeckt.

5. Klemmenhalter (3) nach einem der vorherigen Ansprüche, **dadurch gekennzeichnet, dass** die Abdeckplatte (32), die Basisplatte (31) und der zumindest teilweise auch der Verbindungsarm (33) einstückig hergestellt sind.

6. Klemmenhalter (3) nach einem der vorherigen Ansprüche, **dadurch gekennzeichnet, dass** der Verbindungsarm (33) zweigeteilt ausgebildet ist, wobei die beiden Teile des Verbindungsarms (33) symmetrisch zueinander auf beiden Seiten eines Endes der Abdeckplatte (32) angeordnet sind.

7. Klemmenhalter (3) nach einem der vorherigen Ansprüche, **dadurch gekennzeichnet, dass** an zumindest einem Ende der Abdeckplatte (32) ein Schnapphaken (321) vorgesehen ist, der mit der Basisplatte (31) verrastet, wenn die Abdeckplatte (32) die Aussparungen (311) abdeckt.

8. Bügeleisen (100), umfassend ein Gehäuse (1), eine im unteren Teil des Gehäuses (1) angeordnete Grundplatte (21) und ein elektrisches Heizelement (22) zum Erhitzen der Grundplatte (21), **dadurch gekennzeichnet, dass** es zusätzlich einen Klemmenhalter (3) gemäß einem der vorangehenden Ansprüche umfasst, der zur Halterung elektrisch leitfähiger Klemmen innerhalb des Gehäuses (1) fest angeordnet ist.
